# EUROPÄISCHE PATENTSCHRIFT

(11) **EP 0 907 011 B1**
(45) Veröffentlichungstag und Bekanntmachung des Hinweises auf die Patenterteilung: **03.04.2002**
(21) Anmeldenummer: 98117117.6
(22) Anmeldetag: 10.09.1998
(51) Int. Cl.: F02B 31/08, F02D 9/10

(54) **Einlassanordnung eines Verbrennungsmotors**
Intake system of a combustion engine
Système d'admission d'un moteur à combustion

(30) Priorität: 01.10.1997 DE 19743419
(43) Veröffentlichungstag der Anmeldung: 07.04.1999
(73) Patentinhaber: Ford Global Technologies, Inc., Dearborn, Michigan 48136 (US)
(72) Erfinder: Krzykowski, Heinrich, 58313 Herdecke (DE); Grieser, Klemens, 40764 Langenfeld (DE); Mayer, Thomas E., 50996 Köln (DE); Phlips, Patrick Dr., 50858 Köln (DE)
(74) Vertreter: Bonsmann, Manfred, Dipl.-Ing.

(56) Entgegenhaltungen:
- DE-A- 3 638 021
- DE-A- 4 445 777
- DE-C- 385 174
- US-A- 5 640 941
- PATENT ABSTRACTS OF JAPAN vol. 10, no. 261 (M-514) [2317], 5. September 1986 (1986-09-05) & JP 61 085536 A (NISSAN), 1. Mai 1986 (1986-05-01)

## Beschreibung

Die Erfindung betrifft eine Einlaßanordnung eines Verbrennungsmotors mit mehreren Zylindern, einem jedem Zylinder zugeordneten Einlaßkanal, der in jeweils wenigstens zwei Einlaßventile zum Einlaß eines Luft/Kraftstoffgemisches in den jeweiligen Zylinder mündet, und mit einer im Einlaßkanal wenigstens eines Zylinders um eine quer zur Längsrichtung des Einlaßkanals angeordnete Schwenkachse zwischen einer Wirkstellung, in welcher eine Verwirbelung des Luft-/Kraftstoffgemisches stattfindet und einer Ausgangsstellung verschwenkbaren Steuerklappe mit sich beidseitig der Schwenkachse erstreckenden Flügeln.

Der Einsatz derartiger Steuerklappen zur Beeinflussung der Strömungsverhältnisse im Einlaßkanal eines Verbrennungsmotors ist bekannt (US-A-5 640 941). In der Wirkposition werden im Einlaßkanal Wirbel bzw. Turbulenzen in der Strömung des Luft/Kraftstoffgemischs erzeugt, die sich über die Einlaßventile in die Brennkammer fortpflanzen und dort zu einer effizienteren und stabileren Verbrennung führen, da durch die Verwirbelung die Kraftstoffzerstäubung verbessert und die Flammfrontausbreitungsgeschwindigkeit während des Verbrennungsprozesses erhöht wird. Hierdurch wird insbesondere eine stabilere Verbrennung bei mageren Luft/Kraftstoffverhältnissen erzielt. Durch Einsatz einer derartigen Steuerklappe kann der Kraftstoffanteil in einem Magermotorgemisch reduziert werden, ohne daß es zu Verbrennungsinstabilitäten (wie z.B. Aussetzern) kommt. Dies ist im Hinblick auf eine Absenkung der Stickoxid-Rohemissionen wünschenswert, da die Stickoxid-Rohemissionen grundsätzlich um so niedriger sind, um so magerer der Motor betrieben wird.

Jedoch weist die Steuerklappe in der Wirkposition einen relativ hohen Strömungswiderstand auf. Infolgedessen kommt es zu Strömungsverlusten, die den maximalen Luft/Kraftstoffdurchsatz in den Zylinder begrenzen. Deshalb ist es bekannt, zur Turbulenzerzeugung keine fest im Einlaßkanal installierten Einrichtungen einzusetzen, sondern variable Steuerklappen vorzusehen, die bei höheren Drehzahl-/Drehmomentanforderungen auf Veranlassung der Motorsteuerung von der Wirk- in die Ausgangsstellung bewegt werden können, um einen unbehinderten Luftdurchsatz und somit einen maximalen volumetrischen Wirkungsgrad des Verbrennungsmotors zu erzielen. Durch die verminderte Verwirbelung wird in der Ausgangsstellung weiterhin die Brenndauer beeinflußt und dadurch das Verbrennungsgeräusch reduziert.

Bei der Ausbildung der Steuerklappen wird einerseits eine möglichst gute Verwirbelung in der Wirkposition angestrebt. Andererseits soll in der Ausgangsposition der Steuerklappe die Strömung im Einlaßkanal möglichst nicht behindert werden, da jeder zusätzliche Strömungswiderstand die verfügbare Volllastleistung des Motors vermindert.

Der Erfindung liegt die Aufgabe zugrunde, eine Einlaßanordnung der eingangs genannten Art mit Steuerklappen zu schaffen, bei deren Einsatz eine optimale Verwirbelung in der Wirkposition und eine minimale Strömungsbeeinflussung in der Ausgangsposition erzielt wird.

Diese Aufgabe wird bei einer Einlaßanordnung der eingangs genannten Art erfindungsgemäß durch die Merkmalskombination gemäß dem Kennzeichnungsteil des Patentanspruchs 1 gelöst.

Hierbei bedeutet Grundprofil das Profil der Steuerklappe ohne Berücksichtigung der Aussparung. Dadurch, daß das Grundprofil der Steuerklappe im wesentlichen dem Innenprofil des Einlaßkanals entspricht, wird der Einlaßkanal in der Wirkstellung der Steuerklappe bis auf die Aussparung im wesentlichen verschlossen. Um ein Festsetzen der Steuerklappe in der Wirkstellung zu verhindern, kann zwischen dem Rand der Steuerklappe und dem Innenrand des Einlaßkanals ein Luftspalt vorgesehen sein.

Als Grundflächen der Flügel werden die Flächen der auf den beiden Seiten der Schwenkachse liegenden Flügel - ohne Abzug der Fläche der Aussparung - bezeichnet. Dadurch, daß die Flügel unterschiedlich große Grundflächen aufweisen, verläuft die Schwenkachse asymmetrisch durch die Steuerklappe.

Dadurch, daß der Flügel mit der größeren Grundfläche die Aussparung aufweist, welche in der Ausgangsstellung der Steuerklappe der Anströmrichtung des Luft/Kraftstoffgemisches abgewandt ist und dadurch, daß die Flügel ein sich zu den Flügelspitzen hin verjüngendes Querschnittsprofil aufweisen, wird ein in der Ausgangsstellung der Steuerklappe besonders strömungsgünstiges Steuerklappenprofil geschaffen. Von der Anströmseite aus gesehen vergrößert sich der Querschnitt der Steuerklappe über eine kurze Strecke bis auf seinen maximalen Wert im Bereich der Schwenkachse. Dann verjüngt sich der Querschnitt über die verbleibende Länge. Es entsteht ein asymmetrisches, "tropfenförmiges" Profil, das eine weitgehend laminare Strömung zuläßt und eine in der Ausgangsstellung der Klappe unerwünschte Wirbelbildung an den in Strömungsrichtung hinten liegenden Kanten der Aussparung vermeidet.

In der Wirkstellung dagegen wird durch die an den Außenumfang des Flügels mit größerer Grundfläche angrenzende Aussparung eine starke Verwirbelung erreicht.

In vorteilhafter Ausgestaltung der Erfindung kann vorgesehen sein, daß der Flächenanteil der Aussparung bezogen auf die Grundfläche der Steuerklappe etwa 33% beträgt. Es hat sich gezeigt, daß eine derartige Proportionierung der Aussparung einen optimalen Kompromiß zwischen der angestrebten Wirbelbildung, welche tendenziell besser bei kleineren Aussparungen ist, und unerwünschten Strömungswiderständen (tendenziell geringere Widerstände bei größeren Aussparungen) darstellt.

Weiterhin kann erfindungsgemäß vorgesehen sein, daß die Kontur der Aussparung der Steuerklappe in einem ersten Abschnitt in Richtung der Schwenkachse und in einem zweiten Abschnitt quer zur Schwenkachse verläuft. Durch eine derartige rechtwinklige Ausgestaltung der Aussparung wird das Luft/Kraftstoffgemisch in der Wirkstellung der Steuerklappe verstärkt auf eines der vorzugsweise zwei Einlaßventile geleitet, was die Wirbelbildung innerhalb der Brennkammer begünstigt.

In einer vorteilhaften Ausführungsform der Erfindung kann vorgesehen sein, daß mehrere den Einlaßkanälen der einzelnen Zylinder zugeordnete Steuerklappen vorgesehen sind, die über eine gemeinsame durchgehende Schwenkachse verschwenkbar sind, und daß die Steuerklappen aus Kunststoff ausgebildet und drehfest mit der Schwenkachse verbunden sind. Bei der Ausbildung der Steuerklappen aus Kunststoff ist es besonders vorteilhaft, daß die Steuerklappen im Bereich der Schwenkachse den größten Querschnitt aufweisen, da hierdurch genügend Raum für eine die Achse aufnehmende Bohrung zur Verfügung steht, so daß das strömungsgünstige Querschnittsprofil der Steuerklappen durch die Schwenkachse nicht beeinflußt wird. Die Steuerklappen können auf der Schwenkachse axial verschiebbar ausgebildet sein, um Toleranzen in der Positionierung der einzelnen Einlaßkanäle untereinander auszugleichen. Dies kann vorzugsweise dadurch erreicht werden, daß die Schwenkachse und die entsprechenden Bohrungen ein kantiges, eine Verdrehsicherung bildendes Profil aufweisen.

Die Erfindung wird nachfolgend anhand der Zeichnungen beispielhaft näher erläutert. Es zeigen:
- Fig. 1: eine schematisierte Draufsicht auf eine erfindungsgemäße Einlaßanordnung,
- Fig. 2: eine Einzeldarstellung der Steuerklappenanordnung aus Fig. 1 und
- Fig. 3: eine vergrößerte Darstellung des Querschnittsprofils einer Steuerklappe.

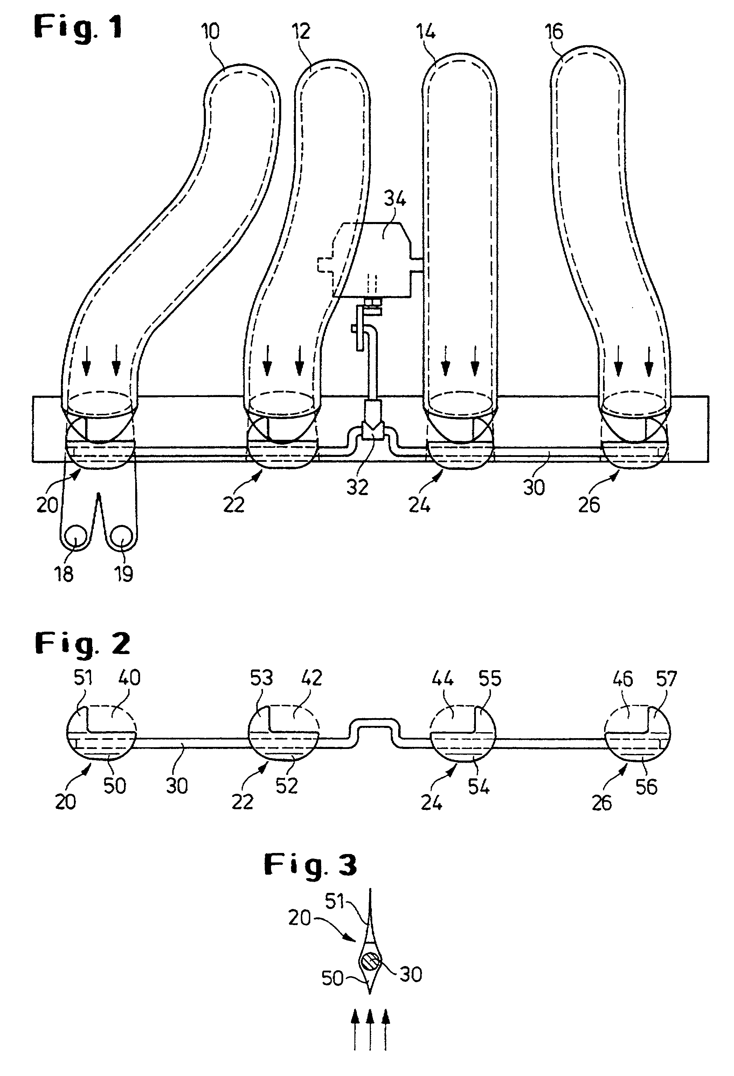

Gemäß Fig. 1 weist ein Einlaßsystem eines Vierzylinder-Verbrennungsmotors vier den einzelnen Zylindern zugeordnete, in Ansaugkrümmern gebildete Einlaßkanäle 10, 12, 14, 16 auf, die ein Luft/Kraftstoffgemisch den Brennkammern der einzelnen Zylinder zuführen. Der Durchtrittsquerschnitt der Ansaugkrümmer kann durch Steuerklappen 20, 22, 24, 26 teilweise verschlossen werden. In Strömungsrichtung hinter den Steuerklappen mündet jeder Ansaugkrümmer in jeweils zwei Einlaßventilen 18, 19 zugeordnete Einzeleinlaßkanäle, die schematisch nur für den Ansaugkrümmer 10 dargestellt sind. Die Steuerklappen 20, 22, 24, 26 werden über eine gemeinsame, asymmetrisch angeordnete Schwenkachse 30 über ein Exzenter 32 und ein Unterdruckstellglied 34 verschwenkt. Das Unterdruckstellglied 34 wird über ein nicht dargestelltes Unterdruck-Schaltventil von einem Steuergerät angesteuert, das als Eingangssignale die Motordrehzahl und den Ansaugdruck erhält. Die Steuerklappen können über den Unterdrucksteller 34 in zwei verschiedene Stellungen geschwenkt werden: Bei niedrigen Motordrehzahlen bzw. -drehmomenten werden die Steuerklappen so verschwenkt, daß diese quer zur Strömungsrichtung im Einlaßkanal stehen und den Innenquerschnitt des jeweiligen Einlaßkanals teilweise verschließen. Durch die Kontur der Steuerklappen 20, 22, 24, 26 entstehen Wirbel, die die Stabilität und Effizienz der Verbrennung verbessern. Bei hohen Drehzahlen bzw. Drehmomentanforderungen werden die Steuerklappen parallel zur Strömungsrichtung in die in Fig. 1 dargestellte Ausgangsstellung geschwenkt. In der Ausgangsstellung bleiben die Strömungsverhältnisse im Einlaßkanal durch die Steuerklappen weitgehend unbeeinflußt.

Gemäß Fig. 2 weisen die einzelnen Steuerklappen 20, 22, 24, 26 jeweils zwei auf gegenüberliegenden Seiten der Schwenkachse 30 angeordnete Flügel 50, 52, 54, 56 bzw. 51, 53, 55, 57 auf, wobei die Schwenkachse 30 asymmetrisch in einer Ausnehmung im unteren Bereich der jeweiligen Steuerklappe verläuft. Die flächenmäßig größeren Flügel 51, 53, 55, 57 weisen randseitige Aussparungen 40, 42, 44, 46 auf. Der Flächenanteil dieser Aussparungen bezogen auf die Grundfläche der Flügel beträgt ca. 33%. Die Aussparungen 40, 42 sind rechtsseitig, die Aussparungen 44, 46 dagegen linksseitig angeordnet.

Gemäß Fig. 3 weisen die Steuerklappen - im Beispiel die Steuerklappe 20 - ein tropfenförmiges Querschnittsprofil auf. Das auf den Flügel 50 anströmende Luft/Kraftstoffgemisch wird durch diese strömungsgerechte Form der Steuerklappen nur minimal beeinflußt, solange sich die Steuerklappen in der Ausgangsstellung befinden.

## Patentansprüche

1. Einlaßanordnung eines Verbrennungsmotors mit mehreren Zylindern, einem jedem Zylinder zugeordneten Einlaßkanal (10, 12, 14, 16), der in jeweils wenigstens zwei Einlaßventile (18, 19) zum Einlaß eines Luft/Kraftstoffgemisches in den jeweiligen Zylinder mündet, und mit einer im Einlaßkanal wenigstens eines Zylinders um eine quer zur Längsrichtung des Einlaßkanals angeordnete Schwenkachse (30) zwischen einer Wirkstellung, in welcher eine Verwirbelung des Luft-/Kraftstoffgemisches stattfindet, und einer Ausgangsstellung verschwenkbaren Steuerklappe (20, 22, 24, 26) mit sich beidseitig der Schwenkachse erstreckenden Flügeln (50, 52, 54, 56; 51, 53, 55, 57), **dadurch gekennzeichnet, daß** das Grundprofil der Steuerklappe im wesentlichen dem Innenprofil des Einlaßkanals entspricht, daß die Flügel unterschiedlich große Grundflächen aufweisen, daß der Flügel mit der größeren Grundfläche (51, 53, 55, 57) eine an dessen Außenumfang angrenzende Aussparung (40, 42, 44, 46) aufweist, welche in der Ausgangsstellung der Steuerklappe der Anströmrichtung des Luft/Kraftstoffgemisches abgewandt ist, und daß die Flügel ein sich zu den Flügelspitzen hin verjüngendes Querschnittsprofil aufweisen.

2. Einlaßanordnung nach Anspruch 1, **dadurch gekennzeichnet, daß** der Flächenanteil der Aussparung (40, 42, 44, 46) bezogen auf die Grundfläche der Steuerklappe (20, 22, 24, 26) etwa 33% beträgt.

3. Einlaßanordnung nach Anspruch 1 oder 2, **dadurch gekennzeichnet, daß** die Kontur der Aussparung der Steuerklappe in einem ersten Abschnitt in Richtung der Schwenkachse und in einem zweiten Abschnitt quer zur Schwenkachse verläuft.

4. Einlaßanordnung nach einem der Ansprüche 1 bis 3, **dadurch gekennzeichnet, daß** mehrere den Einlaßkanälen der einzelnen Zylinder zugeordnete Steuerklappen (20, 24, 26, 28) vorgesehen sind, die über eine gemeinsame durchgehende Schwenkachse (30) verschwenkbar sind, und daß die Steuerklappen aus Kunststoff ausgebildet und drehfest mit der Schwenkachse (30) verbunden sind.

## Claims

1. Intake system of a combustion engine with several cylinders, an intake channel (10, 12, 14, 16) assigned to each cylinder which flows into at least two intake valves (18, 19) for the intake of an air/fuel mixture into the respective cylinder, and with a control valve (20, 22, 24, 26) swivelling in the intake channel of at least one cylinder about a swivel axis (30) arranged at right angles to the longitudinal direction of the intake channel between a working position in which vorticity of the air/fuel mixture takes place and a start position, with vanes (50, 52, 54, 56; 51, 53, 55, 57) extending both sides of the swivel axis, **characterised in that** the base profile of the control valve essentially corresponds to the inner profile of the intake system, that the vanes have different sized areas, that the vane with the largest area (51, 53, 55, 57) has a recess (40, 42, 44, 46) bordering on its external perimeter which in the start position of the control valve is turned away from the flow direction of the air/fuel mixture, and that the vanes have a cross-sectional profile tapering in to the tips of the vanes.

2. Intake system according to claim 1 **characterised in that** the proportion of the area of the recess (40, 42, 44, 46) in relation to the base area of the control valve (20, 22, 24, 26) is around 33%.

3. Intake valve according to claim 1 or 2 **characterised in that** the contour of the recess of the control valve runs in a first section in the direction of the swivel axis and in a second section at right angles to the swivel axis.

4. intake valve according to one of the claims 1 to 3 **characterised in that** several control valves (20, 24, 26, 28) assigned to the intake channels of the individual cylinders are provided which can be swivelled via a common, continuous swivel axis (30) and that the control valves are formed from plastic and are connected in a rotationally secure way with the swivel axis (30).

## Revendications

1. Système d'admission d'un moteur de combustion avec plusieurs cylindres, un canal d'admission (10, 12, 14, 16), affecté à chaque cylindre, qui débouche dans respectivement au moins deux vannes d'admission (18, 19) pour l'entrée d'un mélange air/carburant dans le cylindre concerné, et avec un clapet de commande (20, 22, 24, 26) pouvant basculer dans le canal d'admission d'au moins un cylindre autour d'un axe de pivotement (30) disposé transversalement au sens longitudinal du canal d'admission entre une position active, dans laquelle a lieu un tourbillonnement du mélange air/carburant, et une position initiale, avec des ailettes (50, 52, 54, 56 ; 51, 53, 55, 57) s'étendant des deux côtés de l'axe de pivotement, **caractérisé en ce que** le profil de base du clapet de commande correspond sensiblement au profil intérieur du canal d'admission, **en ce que** les ailettes présentent des surfaces de base de grandeur différente, **en ce que** l'ailette avec la plus grande surface de base (51, 53, 55, 57) présente un évidement(40, 42, 44, 46) adjacent à son pourtour extérieur, qui est opposé, dans la position initiale du clapet de commande, au sens d'arrivée du mélange air/carburant et **en ce que** les ailettes présentent un profil de section qui va en se rétrécissant en direction des extrémités des ailettes.

2. Système d'admission selon la revendication 1, **caractérisé en ce que** la part de surface de l'évidement (40, 42, 44, 46) est d'environ 33% par rapport à la surface de base du clapet de commande (20, 22, 24, 26).

3. Système d'admission selon la revendication 1 ou 2, **caractérisé en ce que** le contour de l'évidement du clapet de commande va en direction de l'axe de pivotement dans une première partie et dans le sens transversal à l'axe de pivotement dans une deuxième partie.

4. Système d'admission selon l'une quelconque des revendications 1 à 3, **caractérisé en ce qu'**il est prévu plusieurs clapets de commande (20, 24, 26, 28) attribués aux canaux d'admission des différents cylindres, qui peuvent pivoter au moyen d'un axe de pivotement (30) continu et commun et **en ce que** les clapets de commande sont conçus en plastique et sont reliés à l'axe de pivotement (30) de façon rigide à la torsion.
